Europäisches Patentamt

European Patent Office

Office européen des brevets

(11) Publication number : **0 493 070 A2**

# (12) EUROPEAN PATENT APPLICATION

(21) Application number : **91311949.1**

(22) Date of filing : **23.12.91**

(51) Int. Cl.⁵ : **C08F 210/16,** C08F 297/08,
C08F 4/649

(30) Priority : **26.12.90 US 633813**
**26.12.90 US 633827**

(43) Date of publication of application :
**01.07.92 Bulletin 92/27**

(84) Designated Contracting States :
**AT BE CH DE DK ES FR GB GR IT LI LU NL SE**

(71) Applicant : **SHELL OIL COMPANY**
**900, Louisiana Street**
**Houston Texas 77002 (US)**

(72) Inventor : **Job, Robert Charles**
**12126 Westmere**
**Houston, Texas 77077 (US)**
Inventor : **Sterna, Larry Lee**
**7900 Westheimer No. 446**
**Houston, Texas 77063 (US)**

(74) Representative : **Myerscough, Philip Boyd et al**
**J.A. Kemp & Co. 14 South Square, Gray's Inn**
**London WC1R 5LX (GB)**

(54) Ethylene-propylene copolymer compositions.

㊼  Polypropylene impact copolymers and ethylene-propylene rubbery copolymers are produced by employing a high-activity, stereoregular polymerization catalyst comprising a titanium halide-containing procatalyst, an organoaluminum compound cocatalyst and a selectivity control agent. During at least the production of the copolymer portion of such polymers, the selectivity control agent is a moderately hindered aromatic nitrogen heterocyclic compound. The impact copolymers thereby produced have improved impact strength and low temperature properties and the ethylene-propylene rubbery copolymers thereby produced have good properties and improved processability.

EP 0 493 070 A2

This invention relates to copolymers of ethylene and propylene having improved properties, more particularly impact copolymers and rubbery copolymers having a high degree of random polymerization in copolymer portions thereof, and to their production.

Polypropylene compositions in general and propylene/ethylene copolymer compositions in particular have gained wide commercial acceptance in many applications because of the relatively low cost of the polymers and the desirable properties they possess. In one modification, copolymers of propylene and ethylene of certain structural characteristics are produced to overcome the normal tendency for propylene compositions to be brittle. Procedures have been proposed for modifying the properties of propylene homopolymers to improve low temperature properties. Many of the proposals provide an ethylene/$\alpha$-olefin copolymer portion in an otherwise homopolymeric polypropylene. The structure of such modified propylene polymers is somewhat uncertain. US-A-3,415,501 describes a process for the production of block copolymers wherein a first block of homopolymeric polypropylene is formed and a second block of other $\alpha$-olefin is grown from the homopolymeric portion in a second polymerization step. An alternative approach comprises mixing a propylene homopolymer and a propylene-/ethylene copolymer. Most commercial products of high impact strength result from the production first of a propylene homopolymer and then of a copolymer portion in the presence of the initial product which still contains active polymerization sites. Such products are well known in the art and have achieved substantial commercial recognition. They are referred to as polypropylene impact copolymers regardless of their particular structure and are said to contain a homopolymer phase (often homopolymeric polypropylene) and a rubber or copolymer phase.

While a number of polypropylene impact copolymers do exhibit improved low temperature properties, the degree of improvement will differ with the nature of the impact copolymer and particularly with the nature of the rubber phase of the impact copolymer. The extent to which the low temperature properties are improved appears to depend on how "rubbery" the rubber (copolymer) phase is. The more elastomeric the rubber phase is, the greater the degree of improvement of low temperature properties such as impact strength will be.

Rubber and elastic ethylene/propylene copolymers have been produced in the substantial absence of any homopolymer portion. These copolymers are conventionally referred to as EPR (ethylene-propylene rubber) and have gained substantial commercial acceptance. These copolymers have good properties such as weatherability, ozone resistance and thermal stability and are useful in automotive applications and as wire and cable coatings. However, conventional ethylene-propylene rubbery copolymers are often difficult to process. In many instances the ease of processing the EPR depends upon how "rubbery" the copolymer is. In general, the more elastomeric the copolymer is, the more easily it will be processed.

Proposals have been made to improve the processability of the ethylene-propylene rubbery copolymer. US-A-4,125,699 discloses ethylene-propylene copolymers having a relatively high ethylene content produced in the presence of vanadium-containing catalysts. The copolymers are said to have improved processability because of a relatively high molecular weight distribution. Vanadium catalysts, however, are of relatively low activity and many, if not most, of the more recent commercial ethylene-propylene rubber copolymers are produced with a more active titanium-based catalyst.

In determining the effectiveness of the rubber phase of an impact copolymer or the elastomeric character of an ethylene-propylene rubbery copolymer, an important factor is the distribution of the ethylene in the copolymer phase of an impact copolymer or in the EPR. It appears to be likely in either modification that ethylene serves to disrupt the crystallinity of the propylene present and reduce polypropylene crystallinity but provide better elastomeric character in the rubber phase of the impact copolymer or the EPR copolymer. If the ethylene and/or propylene polymerized predominantly in blocks the elastomeric character would be relatively low. Alternatively, a completely random structure within the copolymer portion of an impact copolymer would lead to a more elastomeric copolymeric phase and improvement of the low temperature properties of that impact copolymer. In the case of an EPR copolymer, a highly random structure would lead to greater elastomeric character and an improvement in properties such as processability.

JP58217507-A discloses the use of a catalyst complex derived from titanium trichloride, an organoaluminum compound and a phosphorus compound containing a P=O moiety, the catalyst preparation being conducted in the presence of an ether. The product of using such a catalyst complex is said to have random character and good processability. A related copolymer produced with the use of a titanium tetrahalide-derived catalyst is disclosed in US-A-4,506,061. The copolymer is also said to have a high degree of randomness. It would be of advantage, however, to provide additional ethylene-propylene copolymer compositions of improved random polymerization character and improved properties.

The present invention provides ethylene-propylene polymers of improved properties. More particularly, the present invention provides copolymers of ethylene and propylene wherein a high degree of random polymerization is found in copolymeric portions of the copolymers.

According to the invention there is provided an ethylene-propylene copolymer which is

a) a polypropylene impact copolymer having a homopolymer phase of predominantly homopolymeric polypropylene and a copolymer phase of ethylene and propylene, or

b) an ethylene-propylene rubbery copolymer obtainable by a polymerization process employing a high-activity, stereoregular olefin polymerization catalyst,

said ethylene-propylene copolymer having a high degree of random copolymerization in the copolymeric portion thereof.

When the copolymer of the invention is an impact copolymer a) it preferably is one wherein the copolymer phase is from 10% to 50% by weight of the total impact copolymer, the ethylene content of the copolymer phase is from 35% to 50% by weight based on total impact polymer, and during the production of the copolymer phase, the product of the monomer reactivity ratio ($r_1$) for the growing polymer chains terminating in propylene and the monomer reactivity ratio ($r_2$) for the growing polymer chains terminating in ethylene ($r_1 r_2$) is less than 2.1.

When the copolymer of the invention is an ethylene-propylene rubbery copolymer b) it preferably is one having a propylene content of from 30% to 90% by weight based on total copolymer with the remainder being substantially all ethylene, and during polymerization the product of the monomer reactivity ratio ($r_1$) for the growing polymer chains terminating in propylene and the monomer reactivity ratio ($r_2$) for the growing polymer chains terminating in ethylene ($r_1 r_2$) is less than 2.1.

The polymerization process for producing the ethylene-propylene copolymers of the invention is suitably a liquid, or gaseous, or slurry phase process, depending in part on the type of copolymer desired, employing a high activity, stereoregular olefin polymerization catalyst of a type more commonly associated with the production of propylene homopolymers. In terms conventionally employed to describe such catalysts, the stereoregular catalysts of high polymerization activity contain a procatalyst which is usually a titanium halide-containing solid and often a magnesium halide, and which typically contains an electron donor. Suitable electron donors for use in the process of the invention include ethers, esters, nitriles, phosphines, phosphites, stibines, arsines, phosphoramides and alcoholates which may be employed singly or in combination. The preferred electron donors are esters, particularly alkyl esters of aromatic dicarboxylic acids, e.g. diisobutyl phthalate, or phenols such as resorcinol.

The second catalyst constituent, conventionally termed a cocatalyst, is an organoaluminum compound which is typically a trialkylaluminum compound such as triethylaluminum or triisobutylaluminum or is a dialkylaluminum compound including dialkylaluminum halides such as diethylaluminum chloride and dipropylaluminum chloride, as well as dialkylaluminum alkoxides such as diethylaluminum ethoxide. Trialkylaluminum compounds are preferred. The cocatalyst is provided as such as or partial or total complex with the third catalyst constituent which is termed a selectivity control agent. Conventional selectivity control agents are illustrated by esters, particularly aromatic esters, amines, particularly hindered amines, phosphites, phosphates, silanes including alkoxysilanes and aryloxysilanes, hindered phenols and mixtures thereof. In the process of the invention, however, the selectivity control agent at least during copolymerization is a member of a particular class of aromatic nitrogen heterocycles as is defined below.

These high activity stereoregular olefin polymerization catalysts are described in numerous patents and other references including US-A-4,728,705. A typical stereoregular olefin polymerization catalyst contains as a procatalyst a solid constituent comprising a magnesium halide, a tetravalent titanium halide and an electron donor such as diisobutyl phthalate. The halide moieties of such procatalysts are typically chloride. The cocatalyst is the organoaluminum compound which is often at least partially complexed with a conventional type of selectivity control agent. Use of this type of catalyst in propylene homopolymerization results in a polymer product which is predominantly stereoregular, often predominantly isotactic, and many of the catalysts are sufficiently active to produce polymers of desirable properties directly, that is without the necessity of a deashing step. Use of the catalysts containing aromatic nitrogen heterocyclic selectivity control agents is known to lead to predominantly syndiotactic polypropylene but such catalysts have not previously been used for the production of ethylene-propylene copolymers.

Although conventional selectivity control agents are useful in the production of any homopolymeric portion of the copolymer, the selectivity control agent employed during copolymerization is a moderately hindered aromatic heterocyclic amine containing monovalent hydrocarbon substituents on aromatic ring carbon atoms adjacent to the heterocyclic nitrogen atom, which substituents provide some degree of steric or electronic hindrance but not sufficient hindrance to prohibit the operation of the aromatic heterocyclic amine as a selectivity control agent. The presence of hydrogen substituents on adjacent ring carbon atoms does not provide any substantial hindrance and the use of pyridine as selectivity control agent does not result in production of ethylene-propylene copolymers having the desired high degree of random copolymerization. The presence of t-butyl substituents as in the case of 2,6-di-t-butylpyridine results in too great a hindrance to permit production of the desired copolymers. The preferred moderately hindered aromatic heterocyclic amines are those of from 1 to 2 aromatic rings with up to one additional heterocyclic atom which have straight-chain alkyl groups of up to 4 carbon atoms as substituents, which may be the same or different, on each aromatic ring carbon atom adjacent to each heterocyclic nitrogen atom. Illustrative of such aromatic heterocyclic amines are 2,6-lutidine, 2,4,6-collidine, tetramethylpyrazine, 2,6-diethylenepyridine and 2,4,6-tri-n-propylpyridine when producing a polypropylene impact copolymer a) and the first three of these and quinaldine, 2,4-dimethylquinoline or 2,3-dimethyl-quinoxaline when producing an ethylene-propylene rubber copolymer b). The preferred substituent groups for the adjacent aromatic ring carbon atoms are methyl groups and particularly preferred as the aromatic heterocyclic amine for use as selectivity control agent is 2,6-lutidine.

The use of these selectivity control agents in the production of elastomeric, syndiotactic polypropylene is known from copending USSN 342,832, filed April 25, 1989. While it is postulated by Busico et al, Makromol. Chem., 184 2193 (1983) that propylene polymerization catalysts which lead to syndiotactic homopolymer are the only catalysts which might catalyze the formation of alternating propylene/ethylene copolymer, specific and demonstrated examples of catalysts considered to have commercial activity are not provided.

The catalysts containing the aromatic heterocyclic amine are used in otherwise well known processes to produce the copolymers of the invention. Although use of a gas phase reaction is not precluded, the preferred processes for the production of the polypropylene impact copolymers a) as well as the EPR copolymers b) of the invention are liquid phase processes employing a reaction diluent which may be a non-polymerizable diluent such as propane or a liquified monomer of the polymerization such as propylene. These processes when used to produce an impact copolymer are conducted in a batchwise, continuous or semi-continuous manner and typically involve contacting propylene and polymerization catalyst in the liquid phase under polymerization conditions. Ethylene and any necessary propylene are then added to the resulting first polymerization product mixture and, subsequent to copolymerization, the impact copolymer product is recovered by conventional methods.

Typical polymerization conditions include a reaction temperature of from about 30°C to about 120°C, preferably from about 45°C to about 90°C, and a pressure sufficient to maintain the reaction mixture in a liquid phase. Such pressures are up to about 4.05 MPa (40 atmospheres) but are more often from about 2.03 MPa (20 atmospheres) to about 3.04 MPa (30 atmospheres). The precise methods of conducting the polymerizations and the control of reaction conditions, including the use of molecular hydrogen to control molecular weight, are within the skill and knowledge of the art.

The homopolymer phase of the impact copolymers is predominantly but not necessarily homopolymeric polypropylene. To obtain particular properties for particular applications it may be desirable to incorporate in the otherwise homopolymer portion of the impact copolymer a small amount, e.g. up to about 6% by weight, of a second $\alpha$-olefin such as ethylene, 1-butene or even a higher molecular weight $\alpha$-olefin. The incorporation of the optional small amount of other $\alpha$-olefin is by conventional methods and serves to modify but not substantially alter the properties of the homopolymer phase. In the embodiments where a small amount of other $\alpha$-olefin is present the initial polymerization product although technically copolymeric is still referred to as the homopolymer phase. Such homopolymeric phases which are substantially polypropylene, i.e. phase produced in the substantial absence of a second $\alpha$-olefin, are preferred.

The second phase or copolymer phase of the impact copolymer typically comprises predominantly a copolymer of ethylene and propylene although small amounts of other $\alpha$-olefin moieties could optionally be present. Through the control of the monomers provided to the reaction mixture it is known to control the proportions of ethylene and propylene in the copolymer phase and also the proportion of the copolymer phase in the impact copolymer. Within the impact copolymers of the invention the proportion of ethylene in the copolymer phase is suitably from 35% to 75%, preferably from 35% to 50%, by weight based on total copolymer phase. The copolymer or rubber phase will suitably constitute from 10% to 50%, preferably from 10% to 40%, by weight of the total impact copolymer.

The impact copolymers of the invention are characterized by a high degree of random copolymerization in the copolymer or rubber phase. This increased random character leads to more efficient operation of the copolymer phase as a rubber and better low temperature properties of an impact copolymer of the invention as compared to other impact copolymers having a similar proportion of copolymer phase.

When it is desired to produce an EPR rubbery copolymer, the process is conducted in a batchwise, continuous or semi-continuous manner, and typically involves contacting ethylene and propylene and the polymerization catalyst.

The ethylene-propylene copolymer, subsequent to polymerization, is recovered by conventional methods. Typical polymerization conditions are as described hereinbefore in relation to the impact copolymer a).

The ethylene-propylene rubbery copolymers are somewhat variable in proportions. The proportion of propylene in the copolymer suitably is from 30% to 90%, preferably from 40% to 80%, by weight based on total ethylene-propylene copolymer. The remainder of the copolymer is at least predominantly ethylene. It is possible for some applications to include a small amount, e.g. up to about 5% by weight, of some other $\alpha$-monoolefin of up to 10 carbon atoms, such as 1-butene or 4-methyl-1-pentene, within the polymer. Such materials, although technically terpolymers, are included within the conventional meaning of the term ethylene-propylene copolymers. The preferred copolymers of the invention are those having a propylene content as indicated above with the remainder being substantially all ethylene.

The ethylene-propylene rubber copolymers of the invention are characterized by a high degree of random copolymerization as compared with conventional ethylene-propylene copolymers. This structural distinction is reflected in the improved properties of the ethylene-propylene copolymer including an improved processability, improved low temperature impact strength and lower brittle temperature for a given content of ethylene.

The degree of random polymerization of a copolymer or copolymeric portion of a polymer and a standardized means of representing that are discussed in "Textbook of Polymer Chemistry", F. W. Billmeyer, Jr., Interscience Publishers, New York, 1957, page 221 et seq. The extent to which various types of polymerization can and do take place is determined, at least in part, by the reactivity of a growing polymer chain terminating with one monomer towards its own monomer as compared with its reactivity toward another monomer. When the growing polymer chain exhibits a strong preference for reaction with the other monomer, an alternating structure is observed. When a growing polymer chain exhibits the same preference for reacting with one monomer or the other, a random copolymerization takes place and the two types of monomer will be found randomly along the polymer chain in relative amounts determined by the composition of the olefin feed. A strong preference for reacting with the same monomer as the terminating monomer leads to block polymers.

In the Billmeyer text, the term "monomer reactivity ratio" is defined for the ratio of constants $r_1$ and $r_2$ for a polymer chain terminating in a first monomer (e.g. propylene) and a second monomer (e.g. ethylene), respectively, reacting with its own monomer as opposed to reacting with the other monomer. The magnitude of the value is related to the tendency to react with the same monomer as that terminating the growing polymer chain. If a value of $r_1$ is greater than 1, it has the significance that a chain terminating in a first monomer ($M_1$) prefers to react with additional first monomer. A value of $r_1$ less than 1 signifies that the $M_1$-terminating copolymer chain would prefer to react with the second monomer ($M_2$). Corresponding considerations apply to value of $r_2$. These considerations apply generally to copolymerizations leading to the ethylene-propylene copolymers of the invention. The reference further describes the copolymerization in terms of the product of monomer reactivity ratios, i.e. $r_1r_2$. A value of $r_1r_2$ equal to zero is a necessary condition for formation of an alternating copolymer. A value of $r_1r_2$ of 1 would indicate completely random copolymerization. A value of $r_1r_2$ greater than 1 would indicate that the copolymer is at least somewhat blocky and the higher the value of $r_1r_2$ is determined to be, the more blocky the copolymeric chain will be. In the ethylene-propylene copolymers of the invention, the value of $r_1r_2$ as defined above is less than about 2.1, for ethylene content above 20% mole, and is preferably less than 1.7. The mathematical derivation of the $r_1r_2$ values is described in the above textbook reference.

The $r_1r_2$ value for a given copolymer is experimentally determined traditionally by measuring copolymer composition as a function of the composition of the feed as is also described in the Billmeyer reference. An alternative and more direct method is based on the nuclear magnetic resonance (NMR) spectra of the copolymer, particularly the $^{13}$C-NMR spectra, as described by Kakugo et al, Macromolecules 15, 1150 (1982). The $r_1r_2$ value is probably not a quantitative measure of the degree of random copolymerization in all cases. However, when similar monomers are used the $r_1r_2$ value does give a good indication of the extent to which a copolymer or a copolymer phase was produced by random polymerization.

The polymeric compositions of the invention are therefore ethylene-propylene copolymers having a relatively high degree of random copolymerization to any copolymer portion thereof. When the copolymer is an EPR rubbery copolymer, the random polymerization is found throughout the polymeric molecule. These polymers are broadly similar to conventional EPR rubbery copolymers and are processable by conventional methods. Conventional additives such as stabilizers, antioxidants, fillers, colorants, processing aids and mold release agents can be added to the polymers to modify the properties thereof. EPR copolymers have established utility as precursors of shaped parts such as automotive and electrical housings and in blending applications with other polymers, but because of the high degree of random polymerization the EPR rubbery copolymers of the invention are more easily processable at lower processing temperatures.

When the copolymer of the invention is a polypropylene impact copolymer it has a more random copolymerization in the copolymer phase of the polymer. The impact polymers can be further processed by methods conventional for impact copolymers including the treatment with peroxide to lower molecular weight known as "visbreaking". A variety of the conventional additives for polypropylene impact copolymers may be added, including stabilizers, antioxidants, fillers, colorants, nucleating agents and mold release agents. The impact copolymer compositions are processable by methods well known for the processing of thermoplastic materials into a variety of shaped articles.

The invention will be further described by reference to the following Examples.

## Example I

A polypropylene impact copolymer is produced by initially polymerizing propylene under polymerization conditions in liquid propylene as diluent and in the presence of a catalyst produced from (a) a procatalyst formed by reacting magnesium ethoxide and titanium tetrachloride in the presence of diisobutyl phthalate, (2) triethylaluminum and (3) an alkoxysilane such as diisobutyldimethoxysilane to produce a homopolymer phase product, and then passing the product of the initial polymerization to a second stage liquid phase reactor wherein ethylene and 2,6-lutidine are added to produce a rubber phase. The resulting polypropylene impact copolymer has a higher degree of random copolymerization in the rubber phase than when the silane alone is allowed to control the selectivity.

## Example II

A procatalyst was prepared as described in US-A-4,804,648. The procatalyst precursor was a crystalline magnesium methoxide compound of the formula: $Mg_4(OCH_3)_6(CH_3OH)_{10}(resorcinol)_2$, hereinafter termed "M", prepared by the dropwise addition of a tetramethoxysilane stabilized 12% magnesium methoxide solution to a solution of 0.5 equivalent of 2-methylresorcinol in methanol. Partial azeotropic dissolvation of the crystalline material was carried out by slurrying 40 grams of the crystalline magnesium methoxide compound in 300 grams of cyclohexane containing 120 grams of tetraethoxysilane and boiling this mixture until a decrease or 20 to 30% in solvent volume had occurred.

The procatalyst was prepared by stirring 7.8 grams of the partially desolvated "M" with 2.5 ml of diisobutylphthalate in 200 ml of a 50-50 (vol/vol) titanium tetrachloride-chlorobenzene solution for 1 hour at 115°C then collecting the solids by hot filtration. The solids were treated with two washes at 115°C with fresh 200 ml portions of the 50/50 solvent mixture followed by a quick rinse (less than 10 minutes) with 100 ml of fresh titanium tetrachloride-chlorobenzene solvent mixture. Excess $TiCl_4$ was removed by one wash with isooctane at 90°C followed by two room temperature isooctane washes followed by drying under moving nitrogen at 40°C. Ti content was 2.72%. A portion of the dry procatalyst powder was then made into a 5% slurry in mineral oil.

In the production of the copolymers, triethylaluminum was used as cocatalyst as a 0.28 molar solution in isooctane. The procatalyst was utilized as a 5% slurry in mineral oil. The selectivity control agents (SCA), 2,6-lutidine for syndiotactic specificity or n-propyltrimethoxysilane for isotactic specificity, were used neat. Polymerization was effected by mixing the catalyst components in a mmol ratio of 0.42/0.12/0.006 (TEASCA/Ti) and the mixture allowed to stand at room temperature for 20 minutes. The mixture was then injected into 2.7 liters of liquid propylene in a 3.8 litre (1 U.S. gallon) stainless steel autoclave (which optionally contained hydrogen for molecular weight control) into which a steady, continuous ethylene flow had been established (higher flow rates for higher ethylene contents in the copolymers). In order to obtain an optimal fill ratio, the ethylene was allowed to flow into the reactor for 10 minutes prior to catalyst injection. The reactor was maintained at 60°C for 90 minutes with continuous stirring and ethylene flow. That polymerization was uniform was attested to by a constant exotherm during that time period. After cooling the autoclave and flashing the remaining propylene, the polymer was removed as an amorphous solid material. The polymer was cut into small pieces and dried in air overnight, then for several hours under aspirator vacuum at 80°C, before physical and chemical characterizations were carried out.

In order to attain the higher levels of ethylene incorporation, polymerizations were carried out in propane diluent. Thus, about 1.5 liters of propane and about 1.2 liters of propylene were added to the autoclave prior to catalyst injection. In one Example (Example 6) a small amount of a second comonomer (4-methyl-1-pentene) was also added. The actual final weight percentage of propylene in solution, for the various Examples, is shown in Table 1. In a typical run (EXample 10) the propylene dropped from 40% of the solution at the onset of polymerization to 38% at termination of polymerization.

The $^{13}$C magnetic resonance spectra were obtained at 135°C, on samples dissolved in 1,2,4-trichlorobenzene. The spectrum reference was the mmm methyl group. The spectral analyses were carried out with the aid of a VAX 3500 computer. The $r_1 r_2$ values for each example, calculated according to the procedure outlined in the Kakugo et al reference, are listed in Table 1.

Examples 1 to 6 were prepared according to the teachings of this invention using 2,6-lutidine as selectivity control agent and different ethylene flow rates. Examples 7 to 10 (not of the invention) were run as comparative examples but using a selectivity control agent which directs the production of predominantly highly crystalline isotactic polymer.

6

## TABLE 1

| Example | Selectivity Control Agent | Propylene in Solvent (% wt) | $C_2$ in Polymer (% wt) | (% mol) | $r_1 r_2$ |
|---|---|---|---|---|---|
| 1 | 2,6-L | 91 | 5.0 | 7.3 | 4.55 |
| 2 | 2,6-L | 91 | 7.7 | 11.1 | 3.76 |
| 3 | 2,6-L | 91 | 23.7 | 31.8 | 1.83 |
| 4 | 2,6-L | 57 | 38.2 | 48.1 | 1.35 |
| 5 | 2,6-L | 40 | 44.8 | 54.9 | 1.55 |
| 6 | 2,6-L* (+40 ml $4MeC_5$) | 91 | 13.8 | 19.4 | 2.16 |
| Comparative Examples | | | | | |
| 7 | NPTMS | 91 | 9.2 | 13.2 | 2.92 |
| 8 | NPTMS | 91 | 23.8 | 31.9 | 3.13 |
| 9 | NPTMS | 91 | 26.2 | 34.7 | 2.64 |
| 10 | NPTMS | 40 | 52.4 | 62.3 | 2.68 |

2,6-L = 2,6-lutidine
NPTMS = n-propyltrimethoxysilane
$4MeC_5$ = 4-methyl-1-pentene

*In Example 6, trimethylaluminum replaced triethylaluminum

## Claims

1. An ethylene-propylene copolymer which is
    a) a polypropylene impact copolymer having a homopolymer phase of predominantly homopolymeric polypropylene and a copolymer phase of ethylene and propylene, or
    b) an ethylene-propylene rubbery copolymer obtainable by a polymerization process employing a high-activity, stereoregular olefin polymerization catalyst,
        said ethylene-propylene copolymer having a high degree of random copolymerization in the copolymeric portion thereof.

2. An ethylene-propylene copolymer according to claim 1 wherein the copolymer is a polypropylene impact copolymer a) wherein the copolymer phase is from 10% to 50% by weight of the total impact copolymer, the ethylene content of the copolymer phase is from 35% to 50% by weight based on total impact polymer, and during the production of the copolymer phase, the product of the monomer reactivity ratio ($r_1$) for the growing polymer chains terminating in propylene and the monomer reactivity ratio ($r_2$) for the growing polymer chains terminating in ethylene ($r_1 r_2$) is less than 2.1.

3. An ethylene-propylene copolymer according to claim 1 wherein the copolymer is an ethylene-propylene rubber copolymer b) having a propylene content of from 30% to 90% by weight based on total copolymer with the remainder being substantially all ethylene, and during polymerization the product of the monomer reactivity ratio ($r_1$) for the growing polymer chains terminating in propylene and the monomer reactivity ratio ($r_2$) for the growing polymer chains terminating in ethylene ($r_1 r_2$) is less than 2.1.

4. A process for producing a polypropylene impact copolymer as claimed in claim 2 which comprises polymerizing propylene and optionally additional $\alpha$-olefin of up to 8 carbon atoms to produce a homopolymer phase of predominantly homopolymeric polypropylene and subsequently copolymerizing ethylene and propylene in the presence of the homopolymer phase, a liquid polymerization diluent and a high activity stereoregular olefin polymerization catalyst comprising a solid titanium halide-containing procatalyst, an organoaluminum compound cocatalyst and, as selectivity control agent, a moderately hindered aromatic heterocyclic amine.

5. A process according to claim 4 wherein the aromatic heterocyclic amine is 2,6-lutidine, 2,4,6-collidine, tetramethylpyrazine, 2,6-diethyl-pyridine or 2,4,6-tri-n-propylpyridine.

6. A process for producing an ethylene-propylene rubber copolymer as claimed in claim 3 which comprises copolymerizing ethylene and propylene in the presence of a liquid reaction diluent and a high activity, stereoregular olefin polymerization catalyst comprising a titanium halide-containing procatalyst, an organoaluminum cocatalyst, and a moderately hindered aromatic nitrogen heterocycle.

7. A process according to claim 6 wherein the aromatic nitrogen heterocycle is 2,6-lutidine, 2,4,6-collidine, tetramethylpyrazine, quinaldine, 2,4-dimethylquinoline or 2,3-dimethylquinoxaline.